(19) Europäisches Patentamt
European Patent Office
Office européen des brevets

(11) **EP 3 660 352 B1**

(12) **EUROPEAN PATENT SPECIFICATION**

(45) Date of publication and mention of the grant of the patent:
**22.03.2023 Bulletin 2023/12**

(21) Application number: **19212204.2**

(22) Date of filing: **28.11.2019**

(51) International Patent Classification (IPC):
**F16H 3/089** *(2006.01)*   **F16H 55/18** *(2006.01)*
**F16H 61/04** *(2006.01)*

(52) Cooperative Patent Classification (CPC):
**F16H 3/089;** F16H 55/18; F16H 2003/0811;
F16H 2003/0818; F16H 2061/0474;
F16H 2200/0052

(54) **DIVIDED GEAR WHEEL FOR AN AUTOMATIC POWER TRANSMISSION SYSTEM**

GETEILTES ZAHNRAD FÜR EIN AUTOMTISCHES GETRIEBE

ROUES DENTÉE DIVISÉE POUR UNE BOÎTE DE VITESSES AUTOMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.11.2018 DE 102018220492**

(43) Date of publication of application:
**03.06.2020 Bulletin 2020/23**

(73) Proprietors:
• **Kontopoulos, Leonidas Kyros
  60596 Frankfurt am Main (DE)**
• **Kontopoulos, Kyros Filippos
  60596 Frankfurt am Main (DE)**

(72) Inventors:
• **KONTOPOULOS, Konstantinos
  60596 Frankfurt am Main (DE)**
• **KONTOPOULOS, Grigorios Maximilian
  60596 Frankfurt am Main (DE)**

(74) Representative: **Keil & Schaafhausen
Patentanwälte PartGmbB
Friedrichstraße 2-6
60323 Frankfurt am Main (DE)**

(56) References cited:
EP-A1- 3 025 072     WO-A1-2008/062192
US-A- 1 162 305      US-A1- 2014 116 174
US-A1- 2015 072 813

**Description**

FIELD OF THE INVENTION

The present invention relates to the field of automatic power transmission systems and in particular to an automatic power transmission system, to a method to operate an automated power transmission system and to an automotive vehicle comprising an automatic power transmission system.

BACKGROUND

Known automotive vehicles, such as trucks, cars, motorbikes or the like, use power transmission systems (e.g. gearboxes) in order to provide a range of speed and torque outputs, which are necessary during the movement of the vehicle.

The power transmission system adapts the output of the engine of the vehicle, typically an internal combustion engine, to the drive wheels. For example, automotive engines may operate at a relatively high rotational speed, which is inappropriate for starting, stopping, and slower travel of the vehicle. The power transmission system thus may reduce higher engine speed to the slower wheel speed, increasing torque in the process. Further, if higher travel speeds (or wheel speeds) are desired, a power transmission system may be designed to increase rotational speed of the engine.

Furthermore, the engine provides its highest torque and power outputs unevenly across the rev range resulting in a torque band and a power band. Often the greatest torque is required when the vehicle is moving from rest or traveling slowly, while maximum power is needed at high speeds. Therefore, a power transmission system is required that transforms the engine's output so that it can supply high torque at low speeds, but also operate at high speeds with the motor still operating within its limits.

In order to cover a wide range of torque and/or rotational speed, typical automotive vehicles comprise gearboxes, having several gears that provide different gear ratios. The gear ratio i is the ratio or the rotational speed of the input gear wheel $\omega_{in}$ to the rotational speed of the output gear wheel $\omega_{out}$.

$$i = \frac{w_{in}}{w_{out}}$$

To allow the engine to operate at a desired operating point, such as maximum torque, maximum power, optimal efficiency, known automotive vehicles are equipped with power transmission system having multiple gears. For instance, in order to increase the efficiency of a vehicle and thus saving fuel, the vehicle's engine is desirably operated within the area of Brake Specific Fuel Consumption (BSFC), wherein BSFC is a measure of the fuel efficiency of a combustion engine. The BSFC area varies depending on the design of each specific engine and is dependent on the engine's speed and load. Operating the engine within the BSFC area can be achieved by providing an increased number of gears. This is, as a higher number of gears allows to operate the engine closer to a desired operating point Further, providing more gears allows to cover a wider range of torque and/or rotational speed. Typical cars comprise power transmission systems having at least 5 gears, and trucks or tractors are provided with power transmission systems having at least 16 gears.

Different types of power transmission systems have been developed like manual, semi - automatic and fully automatic systems where gear ratio change occurs automatically as the vehicles moves. With an increasing number of gears, semi-automatic and fully automatic systems became more popular, as frequent manually shifting of gears can be avoided. Automatic transmission systems are transmission systems that allow for an automated shifting of gears and/or gear ratios as the vehicle is in motion without the interference of the driver. Further, some automatic transmission systems allow the driver to change gears by commanding a gear ratio changing action. Accordingly, these automatic transmission systems can be operated fully automatically or based on driver commands.

There are numerous automatic power transmission systems such as 1) Traditional torque converter, 2) Automated manual transmission (SAT), 3) Continuously Variable Transmission (CVT), 4) Dual Clutch Transmission (DCT), 5) Direct Shift Gearbox (DSG), 6) Tiptronic Transmission and many others.

However, those known systems cannot continuously transfer power during the automated gear shifting. Further, during gear shifting, these known systems suffer from energy loss due to friction between clutch disks or the like, such as in CVTs and DSGs.

Thus, it is the object of the present invention to provide an automatic power transmission system, particularly for automotive vehicles, that at least partly overcomes the aforementioned drawbacks. In particular, the automatic power transmission system allows for continuously transferring power when shifting gear ratios and for reduced power losses due to friction.

Prior transmission systems using divided gear wheels are known from US 1162305A, WO 2008/062192 and DE 219963 A. In addition, a divided crank pulley is shown in US 2015/072813 A1.

US 1162305 A relates to a divided gear wheel with one elastic element. It's known that without a synchronizing engagement mechanism. This means, that, when there is an absence of clutch disks, the difference in rotation between the two parts that are going to be engaged, have to be significant small (< 20 RPM) otherwise the dog clutch and the assign gear will refuse to engage or the tooth will failure, because the divided gear wheel has one spring. That's for handling the load and so the elastic constant should be great. (Can't be small that a smooth engagement requires, because exist danger of plastic deformation).

In WO 2008/062192 A1 inner/outer part of divided gear wheel connected with resilient means adapted in series to overhaul torque peaks upon engagement or elastic constant as dumpling elements.

It's a passive method to overhaul the torque peaks upon engagement, with "large engagement windows provide greater opportunities to fully engage gear wheel" and when dog clutch teeth engage with inner part of divided gear wheel the occurring torque peak have a loud griding sound or can damage the divided gear wheel or dog clutch, that's why adopt resilient elements.

If dog clutch and inner part of divided gear wheel had a tooth engagement, the tooth of engagement component would refuse to engage or could have a tooth failure. When resilient means adopted in series arrangement the applied total load is the same for each one of the resilied elements and as far all elastic elements have a limit to extend, pressed or torsioned the difference in elastic constant of each one of elastic element is restricted from the max aloud deformation of elastic elements.

In DE 219963 A is disclosed concentric wheels and not divided gear wheel. The softer element is used to handle the occurring load and the stiffer to handle the torque peaks.

It's a manner to overhaul torque shocks.

SUMMARY

The present invention provides a solution according to the subject matter of the independent claims.

In particular, the objects are at least partly achieved by an automatic power transmission system, e.g. for an automotive vehicle, that comprises an input shaft, supporting input gear wheels and an output shaft, supporting output gear wheels. Each input gear wheel assigned to the input shaft engages with a corresponding output gear wheel assigned to the output shaft, thereby defining a gear ratio. At least one of the gear wheels assigned to the output shaft and/or at least one of the gear wheels assigned to the input shaft of a gear ratio is a divided gear wheel. The automatic power transmission system further comprises at least one engaging part that is assigned to the input shaft or the output shaft and to at least a divided gear wheel. The engaging part is arranged axially movable along the assigned shaft to change a gear ratio, wherein the engaging part is adapted to engage with the inner part of the divided gear wheel, thereby torque proof fixing the inner part with the assigned shaft.

The divided gear wheel comprises an inner part, being engageable with a shaft and an outer part, comprising teeth for torque transmission with another gear wheel. The inner part and the outer part have a common rotational axis. Further, the inner part is at least partially arranged within the outer part and the inner part is coupled to the outer part by means of at least sets of two elastic elements, so that the inner part is arranged angularly deflectable with respect to the outer part around the common rotational axis. The inner and the outer part are adapted to rotate with the same angular speed if the at least two elastic elements are fully loaded.

The inner part can transfer force and/or torque to the outer part via the elastic element(s). If the inner part is angularly deflected with respect to the outer part the corresponding elastic element is compressed or decompressed, depending on the direction of deflection and the arrangement of the elastic element. Further, inner part can be coupled to the outer part by means of multiple elastic elements. Due to this compression/decompression of the elastic element(s), forces and/or torque can be transferred from the inner part to the outer and vice versa.

The inner part is engageable with a shaft, such as an input shaft or an output shaft, with the help of engagement component.

The engagement part is torque proof connected with the shaft, but axially moveable to the shaft.

Accordingly, rotational forces can be transferred from the inner part to the shaft and vice versa.

The outer part forms the actual gear portion and comprises teeth. Accordingly, the outer part may comprise any type of gearing, such as a spur gear, a helical gear, a skew gear, a bevel gear, a spiral beveled gear, hyoid gear, a crown gear, a worm gear, or the like.

As the inner part is deflectable with respect to the outer part and is coupled to the outer part by means of sets of two elastic elements, differences in angular velocity during a gear ratio changing action can be compensated and power losses can be reduced. This is, as during the gear ratio changing action the elastic element is loaded, due to a differ ence in angular velocity between the inner part of the divided gear and an engaging part (in case the divided gear is a free gear) or due to a difference in angular velocity between the outer part and the inner part (in case the divided gear is a fixed gear). The loaded elastic element thus can store power and return the stored power to the system that otherwise would lead to losses (loses in discs clutch connecting the engine with gearbox).

The elastic element can be a spring element, such as a torque spring or a spiral spring, orany other elastic element, such as a rubber element. Further, different types of elastic elements can be combined in a divided spring gear in order to achieve a desired spring characteristic.

The two elastic elements of each set may be spring elements and may be received within a spring compartment, formed by the inner part and the outer part. In particular, the spring compartment can be a closed compartment. Alternatively, the spring compartment may be an open compartment that allows heat exchange and a facilitated maintenance of the springs.

The divided gear wheel further comprises sets of two elastic elements, wherein the elastic elements are arranged evenly distributed in a circumferential direction. By providing several elastic elements, the spring characteristics can be adjusted more easily. Further, it is possible to combinespring and damping elements. The maximum deflection angle of the inner part is inter alia dependent on the number of elastic elements used. If only one set of two elastic element is provided, the maximum deflection angle may be well above 180°, e.g. in a range of 200° to 240°. In case of multiple sets of two elastic elements that are arranged evenly distributed in a circumferential direction, the maximum deflection angle, and thus the available engagement time, is reduced.

Particularly, a first spring element may be partially arranged within a second spring element and may protrude out of the second spring element on a front face, wherein a spring rate of the first spring element may be lower than a spring rate of the second spring element. For example, a set of two spring elements can be incorporated in a divided spring gear. The set of spring elements will comprise one spring element having a bigger diameter concentrically placed to a spring element having a smaller diameter. Further, because these spring elements have different spring rates, the "softer" spring element will begin to deform initially upon deflection of the inner or outer part and subsequently the "stiffer" spring element will be deformed. Thus, a step-wise spring characteristic can be achieved, resulting in smooth gear ratio changing actions. Further, with providing a "softer" spring element, the engagement between the inner part and the respective shaft is facilitated. Particularly, the engagement between an engagement means of the inner part and a respective engaging part is facilitated, as the force that is required to move the engaging part axially into engagement (e.g. by a sequential shift actuator as will be described in greater detail below) can be reduced.

Further, the inner part comprises engagement means that are adapted to engagewith an engaging part of an automatic power transmission system, wherein upon engagement, the inner part is torque proof engaged with a shaft. The engagement means can be provided on an inner circumferential surface of the inner part, facing an assigned shaft. Further, engagement means can be provided on a front face of the inner part of the divided gear wheel. The engagement means can comprise teeth, grooves and/or recesses.

A gear ratio is formed by two gear wheels, wherein a first gear wheel is a fixed gear wheel, i.e. permanently engaged with a shaft, and a second gear wheel is a free gear wheel, i.e. adapted to be temporarily engaged with a shaft. Either of the first or second gear wheels can be assigned to the input or the output shaft. Further, at least one of the first and second gear wheels is a divided gear wheel as described above. As the inner part of the divided gear wheel is deflectable with respect to the outer part of the divided gear wheel and as the inner part is coupled to the outer part by means of at least one set of two elastic elements, differences in angular velocity during a gear ratio changing action can be compensated and power losses from clutch disc connecting engine with gearbox can be reduced.

The input shaft may be powered by an engine and the output shaft may be adapted to power the wheels of an automotive vehicle. By engaging the engaging part with an assigned divided gear wheel, the inner part of the divided gear wheel is torque proof fixed to the assigned shaft. By this engagement of the engaging part with the divided gear wheel power transfer can be achieved. Accordingly, by engaging different divided gear wheels different gear ratios can be chosen. The engaging part can be assigned to a single divided gear wheel or to multiple divided gear wheels.

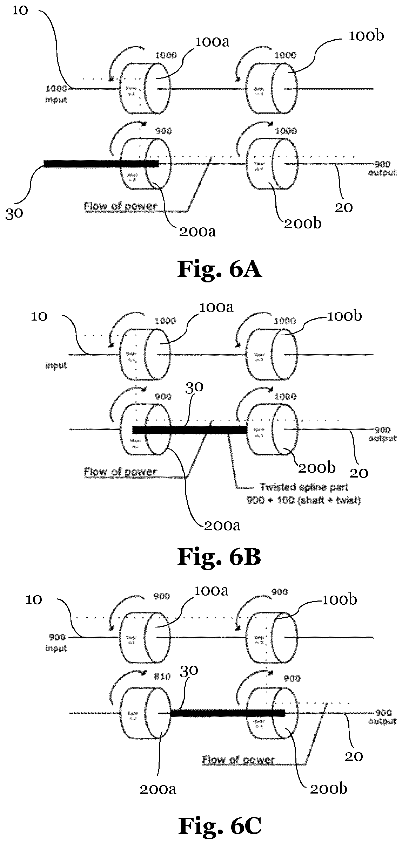

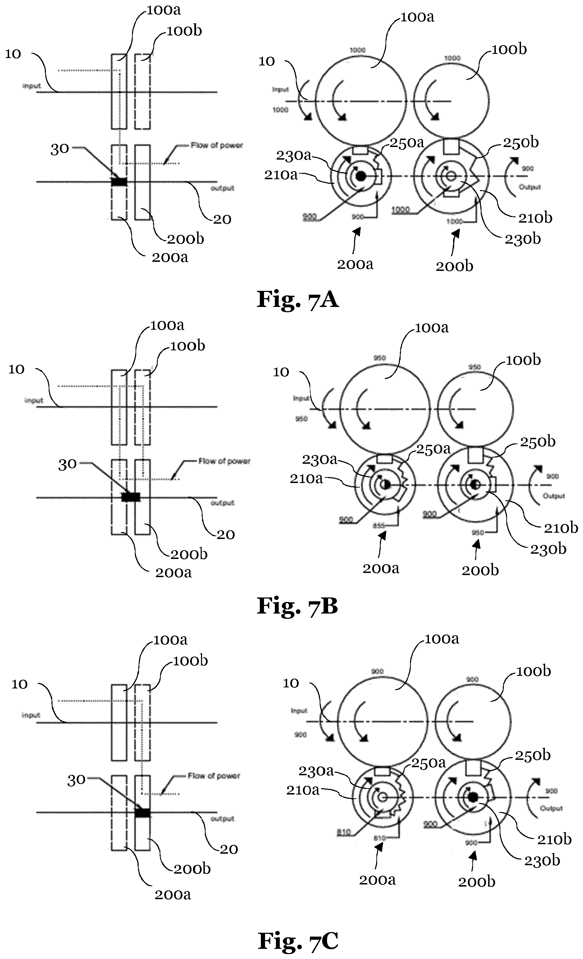

During the gear ratio changing action two divided gear wheels are engaged with the engaging part. After the completion of engagement only one divided gear wheel is engaged with the engaging part as will be explained in greater detail with respect to Figures 6 and 7.

The engaging part may be arranged concentrically to the assigned shaft and the axial movement of the engaging part along the assigned shaft may be guided by straight or helical means, so that the engaging part is rotated relative to the assigned shaft upon axial movement.

In an initial state, the automatic power transmission system may operate with a first gear ratio. Accordingly, power is transferred from the input shaft to the output shaft by means of a first pair of gear wheels that define the first gear ratio. A second gear ratio may be defined by a second pair of gear wheels. To change the gear ratio, form the first to the second gear ratio, the free gear of the first pair of gear wheels must be disengaged and the free wheel of the second pair of gear wheels must be engaged with the respective shaft. The engagement is achieved by means of an engaging part that is assigned to the free gear wheel of the second pair of gear wheels. In the initial state, the engaging part rotates with an angular velocity that is different from the angular velocity of the free divided gear wheel of the second pair of gear wheels. By guiding the engaging part along the assigned shaft by a helical means, so that the engaging part is rotated relative to the assigned shaft upon axial movement, the engaging part can be rotationally accelerated (or decelerated) in order to at least partially synchronize with the angular velocity of the free gear wheel of the second pair of gear wheels. Thus, upon engagement, the engaging part rotates with an angular velocity similar to that of the free gear wheel of the second pair of gear wheels. Remaining differences can be compensated by the elastic element. Thus, power can be transferred permanently during the gear ratio changing action.

The helical means may be integrally formed with the assigned shaft. In particular, the helical means can comprise at least one helical groove or at least one helical protrusion that is adapted to guide the engaging part helically, i.e. in a combined axial and rotational movement. An integrally formed helical means allows for a facilitated assembly of the automatic power transmission system. Further, the helical means can be provided in form of a separate part that is torque proof engaged with the assigned shaft. Thus, the dimensions of the actual shaft can be reduced, and notch tension can be avoided.

The helical means may comprise a helix angle $\alpha$, that follows the equation

$$\Delta w = \frac{U_v}{R} \xrightarrow{U_v = tan(a) \cdot U_a} \Delta w = \frac{tan(a) \cdot U_a}{R}$$

or

$$U_a = \frac{R \cdot \Delta w}{tan(a)}$$

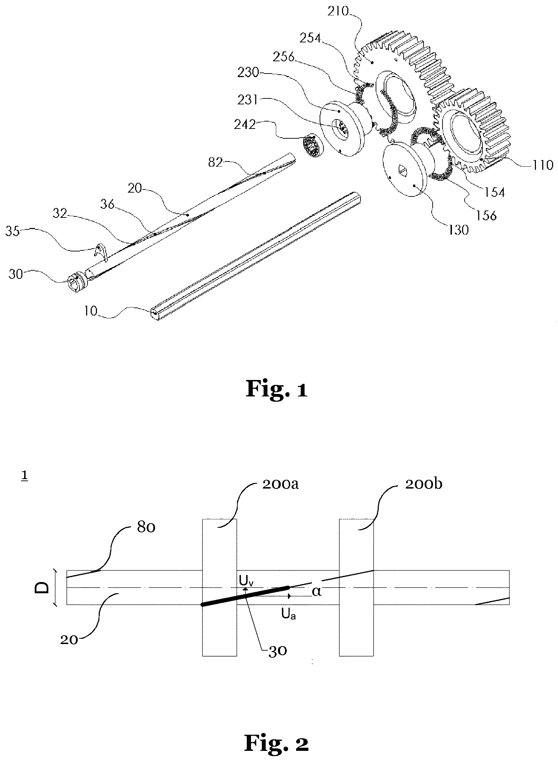

wherin $\Delta\omega$ defines a difference in angular velocity at the beginning of a gear ratio changing action between the assigned shaft and a gear wheel to be engaged, wherein $U_a$ is a desired velocity of the axial movement, and wherein R is the effective radius of the helical means. $U_v$ is the vertical velocity of the engaging part. The given parameters are depicted in Figure 2.

By choosing the helical angle $\alpha$ and the desired velocity of the axial movement $U_a$ according to the above equation the absolute values of the angular velocities of the engaging part and the respective divided gear wheel that is going to be engaged, are substantially equal upon engagement and as a result smooth engagement can be achieved. In particular, a difference in angular velocity $\Delta\omega$ between the engaging part and the respective divided gear wheel can be compensated. The smaller helix angle $\alpha$ is chosen, the greater would be the required velocity of the axial movement $U_a$ and therefore the force, applied by an actuator to move the engaging part axially, increases.

But even if angle a is zero because of the small inertia of inner part of divided gear wheel and the soft elastic element that deforms initially a smooth engagement can be achieved.

The helical means may comprise at least one helical groove and the engaging part may comprise at least one helical arm, being guided in the helical groove. A corresponding engagement means may be arranged at the helical arm, preferably at a distal end thereof, and may be adapted to engage with an engagement means provided on an inner circumferential surface of the inner part of the divided gear wheel.

The helical groove(s) and helical arm(s) provide for the helical guiding. In particular, the helical groove(s) may be integrally formed within the assigned shaft. Further, the engaging part comprising helical arm(s) may be assigned to multiple divided gear wheels. This is, as the helical arm(s) and the corresponding engagement means can be pushed through a first divided gear wheel, which runs freely on the shaft and can engage a second consecutive divided gear wheel. The number of gear wheels the engaging part may be assigned to depends on the length of the helical arm(s) and the distance from center to center along the assigned shaft between the respective divided gear wheels. As the engaging part may be assigned to multiple divided gear wheels, gear ratio changing is facilitated, as only the single engaging part has to be axially moved.

The helical means may comprise at least one helical tooth on an outer circumferential surface and the engaging part may comprise a bushing portion having at least one corresponding helical tooth provided on an inner circumferential surface. A corresponding engagement means may be arranged at the bushing portion and may be adapted to engage with the engagement means of the inner part of the divided gear wheel, wherein the engagement means is preferably provided on an outer circumferential surface and/or a front face of the of the inner part of the divided gear wheel. The number of portions of the inner part of the divided gear wheel can be bigger to facilitate engagement.

This design allows to assign a separate engaging means to every free divided gear wheel. Thereby, the free divided gear wheels can be provided on both, the input and output, shafts. Thus, the automated power transmission system can be provided with reduced length dimensions.

In an alternative embodiment, gear ratios of the automatic power transmission system may be defined by two divided gear wheels. One of these divided gear wheels is a free gear wheel, wherein the other one is a fixed gear wheel. Providing both gear wheels of a gear ratio as divided gear wheels, allows a prolonged time for engagement / disengagement. Particularly, the divided gear wheels can compensate a larger difference in angular velocity between the engaging part and the divided gear wheel to be engaged and therefore the engaging part can be less accelerated.

For example, if the difference in angular velocity between the engaging part and the divided gear wheel to be engaged would be 400 rpm, the time for one revolution would be 150 ms. If the inner part of the divided gear wheel would be deflectable by about 120° (spring deflection) and as the engaging part shall be engaged as long as the elastic element is not fully loaded, the time for engaging (engagement time) would be about 50 ms. Accordingly, if the difference in angular velocity would be just 200 rpm, the time for one revolution would be 300 ms. A 120° deflectable inner part of the divided gear wheel would thus provide a maximal engagement time of about 100 ms. If two divided gear wheels are present, the time for engaging is twice as long, provided that both divided gear wheels provide the same spring deflection.

The difference in angular velocity between the engaging part and the divided gear wheel to be engaged may be up to 1500 rpm, preferably up to 1000 rpm and even more preferably up to 700 rpm. A small difference in angular velocity between the engaging part and the divided gear wheel to be engaged allows for an increased engagement time, as shown by way of example, above. Thus, the actuator that moves the engaging part axially, such as a sequential shift actuator, can be driven with less power, if the difference in angular velocity is small.

Small differences in angular velocity can be achieved by providing multiple gear ratios. Assuming a desired revolution range of a vehicle, such as a truck or the like, in a range between 600 rpm and 2200 rpm and providing an automated power transmission system, having e.g. 20 (equally distributed) different gear ratios, would allow for a difference in angular velocity between the single gear ratios of about 80 rpm. If e.g. only 6 gear ratios would be provided, such as in common automotive vehicles, the difference in angular velocity would be about 266 rpm.

The longer, softer elastic element has a spring constant that permits negligible deformation between inner/outer part regardless of whether the components accelerate or decelerate or rotate with the same angular speed when the divided gear wheel is not engaged, so that a very small elastic constant is required. Because engagement part engage with the inner part of the divided gear wheel and due to the fact that the inertia of the inner part is very small and the elastic constant of the softer elastic element is negligible, a smooth engagement can achieved even without any helix angle.

Generally, the automatic power transmission system can comprise an additional set of gear wheels provided upstream the first gear ratio, to reduce the engines revolutions. Further, the automatic power transmission system may comprise a further additional set of gear wheels provided downstream the last gear ratio of the automatic power transmission system, i.e. at the end of the output shaft for multiplying the output revolution. The gear ratio of these additional upstream and/or downstream set of gear wheels can be chosen according to the intended field of application. Accordingly, the gear ratio i may be greater, equal or smaller than 1.

The automatic power transmission system may comprise at least one additional gear wheel that is supported by the input shaft and/or the output shaft, wherein the additional gear wheel preferably engages with a gear wheel of a planetary gear. Particularly, the automatic power transmission can be combined with any known gear.

Further, the automatic power transmission system may comprise a sequential shift actuator, adapted to axially move the at least one engaging part to change a gear ratio. The sequential shift actuator may be designed so that only one free gear is in engagement with the assigned shaft (after a finished gear ratio changing action). Accordingly, the shift actuator may simultaneously axially move several engaging parts. Thus, a sequential gear ratio changing can be achieved.

The actuator may be a mechanical, a hydraulic, an electric or a pneumatic actuator, or the like. The actuator may be adapted to push (or pull) the engaging part with different axial velocities (depending on the needs / matching the needed $\Delta\omega$) resulting in smooth engagement between the concerning parts.

The automatic power transmission system may further comprise a control unit that is adapted to command a gear ratio changing action. The control unit may be fully automatic, so as to operate the engine at a desired operating point, and/or the control unit may forward user commands so as to allow the user to command a desired gear ratio.

The objects are further at least partly achieved by a method for operating an automatic power transmission system, the method comprising the following steps: Rotating the input shaft and transferring power to the output shaft by means of a first gear ratio. Commanding a gear ratio changing action from a first gear ratio to a second gear ratio. Axially moving an engaging part for engaging a second gear ratio and thereby disengaging the inner part of the divided gear wheel of the first gear ratio from the torque proof fixing with the shaft and engaging the inner part of the divided gear wheel of the second gear ratio, thereby torque proof fixing said inner part with the shaft, wherein the inner part of the divided gear wheel of the second gear ratio is angularly deflected with respect to the outer part and loads the elastic element. Rotating the input shaft and transferring power to the output shaft by means of the second gear ratio. Depending on the design of the engaging part(s) either one engaging part has to be moved, i.e. if the engaging part is assigned to multiple divided gear wheels, or at least two engaging parts have to be moved upon a gear ratio changing action, i.e. if the engaging parts are assigned to a respective single divided gear wheel. In this case a first engaging part engages the divided gear wheel to be engaged and a second engaging part disengages the actually engaged divided gear wheel. As a result, at the end of the gear ratio changing action only one divided (free) gear wheel is engaged.

If the maximum occurring load is very small also one elastic element with variable spring constant can be adopted and that because in this case its like having two elastic element arranged in series.

The objects are further at least partly achieved by an automotive vehicle comprising an automatic power transmission system as described above.

BRIEF DESCRIPTION OF THE FIGURES

In the following, preferred embodiments of the present invention are described with respect to the accompanying figures.

Figure 1                 individual parts of an automatic power transmission system comprising divided gear wheels;

Figure 2                 is a schematic illustration of an output shaft, supporting two out-put gear wheels;

Figure 3                 is a schematic perspective view of an automatic power transmission system according to a first embodiment;

Figure 4                 is a schematic side view of an engaging part;

Figure 5                 is a schematic cut view of an input gear wheel and an output gear wheel, defining a gear ratio;

Figures 6A to C          give a schematic illustration of a gear ratio changing action sequence;

Figure 7A to C           give a further schematic illustration of the gear ratio changing action sequence illustrated in Figure 5;

Figure 8                 is a schematic cut view of an automatic power transmission system according to a second embodiment;

Figure 9A                is a schematic top view of an automatic power transmission system according to the second embodiment;

Figure 9B                is a schematic cut view of an input gear wheel and an output gear wheel, defining a gear ratio;

Figures 9C and 9D        are schematic detailed views of an engaging part, being engaged/disengaged with an inner part of a divided gear wheel;

Figure 10                is a schematic cut view of a further engaging part;

Figure 11                is a schematic perspective view of an automatic power transmission system, and

Figures 12A and 12B      are a schematic illustrations of an automatic power transmission system.

DETAILED DESCRIPTION

As will become apparent from the following, the present application allows to provide a sequential automatic power transmission system that delivers power continuously without power losses from friction between clutch disks, due to the absence of clutch disengagement (or engagement) in every gear ratio changing action.

Figure 1 illustrates individual parts of a power transmission system, comprising two divided gear wheels per gear ratio. A divided gear wheel is consisted by an inner part 130, 230 and an outer part 110, 210, with the inner part being coupled to the outer part by means of two sets of elastic elements 154, 156, 254, 256. Each set of elastic elements is consisted by a first elastic element 154, 254 and a second elastic element 156, 256 with all the elastic elements being received inside the spring compartments that are formed by the inner part 130, 230 and the outer part 110, 210, with two springs received in a single compartment. The spring constant of the first elastic element 154, 254 is smaller than the spring constant of the second elastic element 156, 256.

The presented configuration illustrates a single gear ratio, comprising two divided gear wheels. This is not obligatory since only a single gear wheel per gear ratio has to be a divided gear wheel. In the scenario where only a single divided gear wheel would be adopted in one gear ratio, this divided gear wheel would be engageable to the assigned shaft and therefore free to rotate when not engaged.

The divided gear wheel assigned to the output shaft 20 is engageable by the engaging part 30 and the divided gear wheel assigned to the input shaft 10 being constantly engaged to the assigned shaft. The engagement of each of the divided gear wheels takes place via their inner parts 130, 230. Therefore the inner part 130 is engaged upon demand and inner part 230 is torque proof engaged with the shaft 10. When the inner part 230 is not engaged with the output shaft 20, the divided gear wheel is free to rotate.

The engaging part 30 is guided by helical groove 82 and an actuator coupling 35 is provided. Upon axial movement of the engaging part 30, helical groove 82 provides an additional angular velocity in relation to the angular velocity of the assigned shaft, contributing to a smoother engagement. In another alternative straight guiding means instead of helical can be adopted, helix angle is zero , with a corresponding change in the engaging part 30, and the engagement still being possible since the inertia of the inner part 130, 230 is very small and the spring constant of the first elastic element is also very small.

Bearing 242 assists the rotation of the inner part 230 and is positioned between the output shaft 20 and the inner part 230. Bearing 242 is shaped accordingly in order to permit the engagement of the inner part 230, which takes place with the interaction of the engagement means 36 of the engaging part 30 with the engagement means 231 of the inner part 230 which are formed in relation to each other. The number of engagement means 231 of the inner part 230 can be greater in relation to the number of engagement means 36 of the engaging part 30 in order to assist with the engagement.

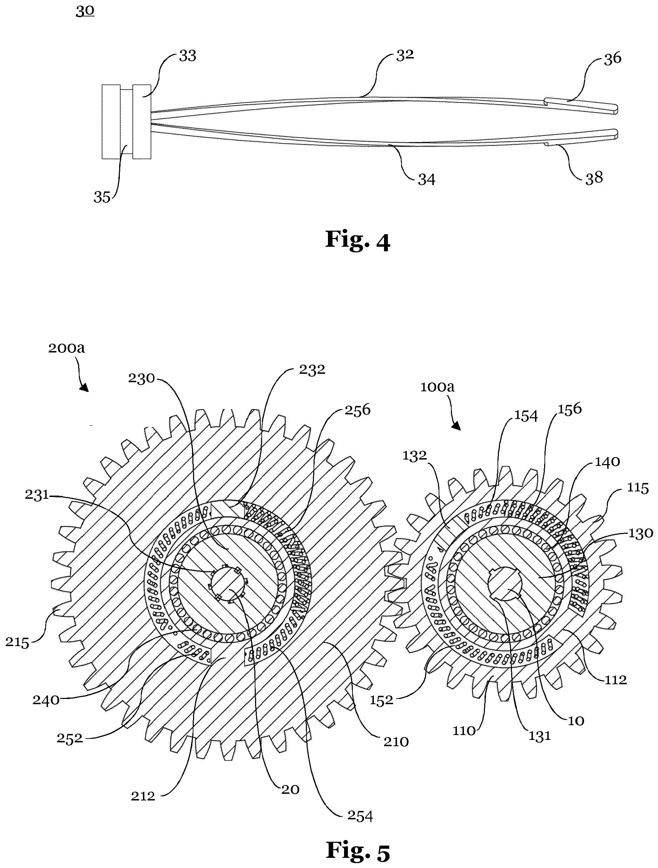

Figure 2 is a schematic illustration of an output shaft 20, supporting two output gear wheels 200a, 200b. The output shaft 20 is provided with helical means 80 that are provided in form of a helical groove. The helical means serve to guide an engaging part 30. The engaging party 30 is depicted in greater detail in Figure 4. The output gear wheels 200a, 200b may be divided gear wheels, as depicted in Figure 5. The helical means 80 has a helix angle $\alpha$ that follows the equation

$$\Delta w = \frac{U_v}{R} \quad \overset{U_v = tan(a) \cdot U_a}{\cancel{\phantom{xxxxxxxxx}}} \quad \Delta w \underline{45} \frac{tan(a) \cdot U_a}{R}$$

wherein $\Delta\omega$ defines a difference in angular velocity at the beginning of a gear ratio changing action between the assigned shaft and a gear wheel to be engaged, wherein $U_a$ is a desired velocity of the axial movement, and wherein R is the effective radius of the helical means. $U_v$ is the vertical velocity of the engaging part. The given parameters are depicted in Figure 2.

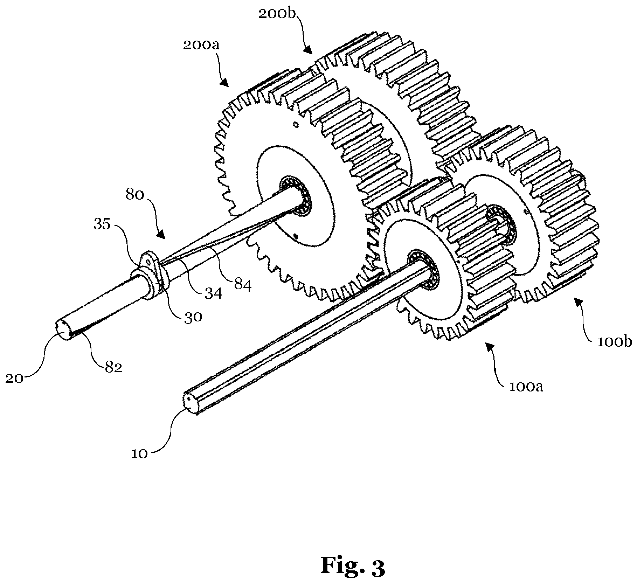

Figure 3 is a perspective view of an automatic power transmission system according to the first embodiment. The automatic power transmission system 1 that is depicted in Figure 3 comprises an input shaft 10 and an output shaft 20. The input shaft 10 supports the input gear wheels 100a, 100b. The output shaft 20 supports the output gear wheels 200a, 200b. It is apparent that the automatic power transmission system can comprise multiple input and output gear wheels and is not limited to the two pairs of input/output gear wheels, depicted in Figure 3.

Input gear wheels 100a, 100b are fixed gear wheels, i.e. they rotate with the same speed as the input shaft 10. Further, input gear wheels 100a, 100b can be divided gear wheels, wherein an inner part of the respective gear wheel is torque proof fixed to the input shaft 10 (see e.g. Figure 5). Output gear wheels 200a, 200b are free gear wheels and are provided as divided gear wheels. Accordingly, if the engaging part 30 is not engaged with the respective output gear wheel 200a, 200b, the output gear wheel 200a, 200b can freely rotate on the output shaft 20. This means that the output shaft 20 and the respective output gear wheels 200a, 200b may have different angular velocities. The engaging part 30 is guided by the helical means 80, which defines two helical grooves 82, 84. The helical grooves 82, 84 receive respective helical arms 32, 34 of the engaging part 30. Further, the engaging part 30 comprises a bushing portion 33 having an actuator coupling in form of a groove or a notch, that is adapted to couple with an actuator that moves the engaging part 30 axially along the output shaft 20 as will be described in greater detail with respect to Figures 6A to 7C.

Figure 4 is a detailed sideview of an engaging part 30. The engaging part 30 comprises a bushing portion 33 that is guided on the output shaft 20. Helical arms 32, 34 extend from the bushing portion 33 and are provided at a distal end with corresponding engagement means 36, 38 that are adapted to engage with engagement means 231 of inner parts 230 of output gear wheels 200. The bushing portion 33 may further be provided with an actuator coupling 35 in form of a groove.

Figure 5 is a schematic cut view of an input gear wheel 100a, that is in an engagement with an output gear wheel 200a, defining a first gear ratio. The input gear wheel 100a is provided as a fixed gear wheel, wherein the output gear wheel 200a is provided as a free gear wheel. Accordingly, the inner part 130 of the first gear wheel 100a is permanently torque prove fixed to the input shaft 10. An outer part 110 is coupled to the inner part 130 by means of spring elements 152, 154, 156. The spring elements are received in spring compartments, formed by the inner and outer part 110, 130. A bearing 140 allows the outer part 110 to be deflected angularly around the inner part 130. The spring elements 152, 154, 156 are supported by elastic element supports 112 and 132, that are preferably integrally formed with the inner part 110 or the outer part 130, respectively.

The first spring element 154 may be arranged concentrically within a second spring element 156, wherein the first spring element 154 has a smaller spring rate than the second spring element 156. The outer part 110 is provided with a gearing comprising at least one tooth 115, to transfer torque to the output gear wheel 200a. The output gear wheel 200a is also a divided gear wheel, comprising an inner part 230 and an outer part 210. The outer part 210 is provided with a gearing, comprising a tooth 215. Further, the inner part 230 is coupled to the outer part 210 by means of spring elements 252, 254, 256. The spring elements are supported by respective elastic element supports 232, 212 which are preferably integrally formed with the inner part 230 or the outer part 210, respectively. Spring element 254 may be a first spring element that is concentrically arranged within a second spring element 256 and that has a smaller spring rate as the second spring element 256. Further, the outer part 210 is supported by a bearing 240 that allows for deflecting the inner part 230 relative to the outer part 210. The inner part 230 further comprises engagement means 231, in form of grooves provided on an inner circumferential surface of the inner part 230, facing the output shaft 20. The corresponding engagement means 36, 38 of the engagement means 30 can be inserted into said engagement means 231 and achieve a temporary torque proof connection between the output shaft 20 and the inner part 230 of the output gear wheel 200a. The permanent torque proof connection between the input shaft 10 and the inner part 130 of the input gear wheel 100a is achieved by corresponding engagement means 131, such as a spline shaft or the like.

A schematic sequence of a gear ratio changing action is illustrated in Figures 6 and 7. In particular, Figure 6 illustrates how an engaging part, being assigned to multiple divided gear wheels, works. Figure 7 illustrates the function of the divided gear wheels. Figures 6 and 7 show schematically a power transmission system, comprising an input shaft 10, an output shaft 20 and two input gear wheels 100a, 100b and two output gear wheels 200a, 200b. The power transmission system may comprise further gear wheels that are presently not depicted. The pair of gear wheels 100a, 200a defines a first gear ratio and the pair of gear wheels 100b, 200b defines a second gear ratio. Further, the power transmission system comprises an engaging part 30. As illustrated, input gear wheels 100a, 100b are fixed gear wheels that can be conventional gear wheels or divided gear wheels. The output gear wheels 200a, 200b are free gear wheels that are provided as divided gear wheels. Accordingly, the first output gear wheel 200a comprises an inner part 230a that is coupled to an outer part 210a by means of an elastic element 250a. The second output gear wheel 200b comprises an inner part 230b that is coupled to an outer part 210b by means of a set of two elastic element 250b.

Figures 6A and 7A depict the power transmission system being operated at the first gear ratio, i.e. the first output gear wheel 200a is engaged with the output shaft 20 by means of the engaging part 30. The second output gear wheel 200b is disengaged and rotates freely. Figures 6B and 7B depict the power transmission system upon a gear ratio changing action from the first gear ratio to the second gear ratio and Figures 6C and 7C depict the power transmission system being operated at the second gear ratio, i.e. the second output gear wheel 200b is engaged with the output shaft 20 by means of the engaging part 30. The first output gear wheel 200a is disengaged and rotates freely.

To arrive at the state shown in Figures 6A and 7A, i.e. operating the power transmission system at the first gear ratio, the power transmission system may be transferred from neutral to the first gear ratio with help of a clutch (not shown). Accordingly, the first pair of gear wheels 100a, 200a starts moving and the engine's power is transferred from the input shaft 10 to the output shaft 20 via the first pair of gear wheels 100a, 200a, defining the first gear ratio.

The second pair of gear wheels, i.e. gear wheels 100b, 200b are also engaged with each other. However, as gear wheel 200b is a free gear wheel and is not engaged with the output shaft (cf. Figures 6A and 7A), gear wheel 200b can rotate freely with respect to the output shaft freely. Accordingly, the second pair of gear wheels 100b, 200b does not transfer torque to the output shaft 20 (or vice versa). The same applies to further pairs of gear wheels (not shown) that define additional gear ratios.

When engine reaches a desired speed level, e.g. as it tends to leave a desired operation point, or when the driver commands a gear ratio changing action (e.g. from the first gear ratio to the second gear ratio), a control unit may command the respective gear ratio changing action. Accordingly, an actuator (not shown) may push (or pull) the engaging part 30 linearly. Due to the axial movement of the engaging part 30, the engaging part 30 will engage the following divided spring gear 200b. As the actuator moves the engaging part axially, the engaging part will be forced to accelerate in rotational and axial direction due to the helical guiding. Thus, the engaging part 30 will rotate with the output shaft 30 and in addition with an angular velocity $\Delta\omega$. The dimensions and in particular the helix angle $\alpha$ of the helical means and the desired velocity of the axial movement of the engaging part $U_a$ may be chosen so that the angular velocity of the engaging part 30 matches the angular velocity of the following divided spring gear 200b, upon engaging. Accordingly, when the engaging part 30 reaches the divided spring gear 200b, they will have the same angular velocity and as a result a smooth engagement can be achieved.

As shown in Figures 6B and 7B, when the engaging part 30 begins entering/engaging the inner part 230b of divided gear 200b the elastic element 250b in its interior begins to be compressed due to the deflection of the inner part 230b. In this point of time, engaging part 30 is still partially engaged with the first output gear wheel 200a. This is, as the length of the corresponding engagement means 36, 38 that engage with the engagement means 231 of the inner parts 230a, 230b of the divided gear wheels 200a, 200b may be equal to the distance from center to center between two consecutive divided gear wheels 200a, 200b.

The elastic element 250b may comprise a first spring element that is partially arranged within a second spring element and protrudes out of the second spring element on a front face. The spring rate of the first spring element may be smaller than the spring rate of the second spring element. Thus, initially, the first spring element is compressed. Subsequently, if the inner part 230b reaches the second, stiffer spring element the second spring element starts to be compressed. Accordingly, power can be transferred via the spring elements and the inner part 230b to the output shaft 20. The elastic elements of the previous gear ratio, such as elastic elements 250a of the first output gear wheel 200a, begin to decompress simultaneously up till the engaging part 30 fully engages the desired gear ratio.

As further shown in Figures 6B and 7B, when the engaging part 30 is engaged with both output gear wheels 200a, 200b of the first and second gear ratio, the flow of power is transferred from both gear ratios. Consequently, when the engaging part 30 is engaged only with one output gear wheel 200a, 200b of either the first or the second gear ratio, the flow of power is transferred exclusively by the pair of gear wheels, defining the respective gear ratio, as illustrated in Figures 6C and 7C. As the engagement progresses, a greater amount of power will be transferred by the second gear ratio with equivalent decrease of transferred power by the first gear ratio. The reverse action will take place when a smaller gear ratio is desired, e.g. if the gear ratio changing action is from the second to the first gear ratio.

In the following an example gear ratio changing action is describer, using random numbers of angular velocity of the respective gear wheels. The first input gear wheel 100a may rotate with an angular velocity of 1000 rpm and the first output gear wheel 200a with an angular velocity of 900rpm (both inner and outer parts 210a, 230a). The second input gear wheel 100b may also rotate with an angular velocity of 1000 rpm, as first and second input gear wheels are fixed gear wheels, as shown in Figures 6A and 7A. The second output gear wheel may rotate freely with an angular velocity of 1000rpm (both inner and outer parts 210b, 230b). Therefor the first gear ratio will be 0.9 and the second gear ratio will be 1.

The engaging part 30 rotates with the same angular velocity as the output shaft 20, i.e. with 900 rpm. Thus, the difference in angular velocity between the engaging part 30 and the second output gear wheel 200b is about 100rpm

When a command is given to change the gear ratio, the engaging part 30 begins to move axially with the help of an actuator and is at the same time rotationally accelerated (due to the helical guiding). As a result, when the engaging part 30 reaches the inner part 230b of the second output gear wheel 200b it has an angular velocity, equal to the sum of the rotational speed of the shaft (900rpm) and the rotational speed due to the helical guiding (e.g. 100rpm).

Upon engaging the engaging part 30 with the inner part 230b of the divided gear wheel 200b, the engaging part 30 begins to decelerate, continuing the engagement between the two parts up till it is fully engaged. The outer part 210b of the divided gear wheel 200b still rotates with 1000rpm and the inner part 230b also decelerates due to the engagement, i.e. it rotates with about 900 rpm. Accordingly, the elastic element 250b and in particular, a first spring element is compressed as the engaging part 30 engages the inner part 230b of the divided gear wheel 200b. When the second spring element of the elastic element 250b begins to bare load, the elastic element 250a (such as the second spring element) of the previous gear ratio (i.e. the first gear ratio) begins to decompress. When the decompression of the previous elastic element 250a is completed and the compression of the following elastic element 250b is also completed the power is only transferred via the pair of gear wheels 100b, 200b, forming the second gear ratio, as shown in Figures 6C and 7C.

When the engagement of the engaging part 30 and the second output gear wheel 200b completed, the second output gear wheel 200b rotates with an angular velocity of 900 rpm, and so does the second input gear wheel 100b, resulting in an engine velocity of 900 rpm.

In particular, as the engaging part 30 starts to engage/disengage with any of gear wheels 200a, 200b, the elastic elements 250a, 250b are compressed, or decompressed, respectively. As soon as elastic element 250b begins to compress, the other elastic element 250a begins to decompress. The total needed torque is the sum of torques in the output gear wheels 200a, 200b, when the engaging part 30 is partially engaged in both (scenario of Figures 6B and 7B). As a consequence, as the elastic element 250b compresses, managing greater torque, and the elastic element 250a decompresses, managing lesser torque up till the torque is fully beared by the second output gear wheel 200b. As a result, when the engagement of the engaging part 30 with the second output gear wheel 200b is completed, the flow of power is as follows: input shaft 10 - second input gear wheel 100b - second output gear wheel 200b - output shaft 20. As power can be transferred during the gear ratio changing action, a continuous power transfer is established.

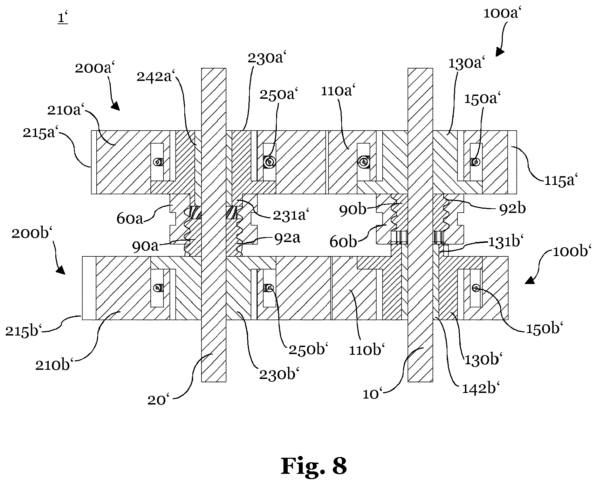

Figure 8 is a cut view of an automatic power transmission system according to a second embodiment. The power transmission system 1' shown in Fig. 7 comprises an input shaft 10' and an output shaft 20'. The input shaft 10' supports input gear wheels 100a' and 100b' and the output shaft 20' supports output gear wheels 200a' and 200b'. As the skilled person will notice, the power transmission system 1' can provide further input and/or output gear wheels that are supported on the input or output shaft, respectively. However, these gear wheels are not shown.

The gear wheels 100a', 100b' and the gear wheels 200a', 200b' are provided as divided gear wheels, each having an inner part 130a', 130b', 230a', 230b' and an outer part 110a', 110b', 210a', 210b'. The pair of gear wheels 100a', 200a' defines a first gear ratio and the pair of gear wheels 100b', 200b' defines a second gear ratio.

The input gear wheel 100a' is a fixed gear wheel, wherein the inner part 130a' is permanently torque proof attached to the input shaft 10'. So is the output gear wheel 200b'. Accordingly, the inner part 230b' is permanently torque proof attached to the output shaft 20'. As will become apparent from Figure 8, each gear ratio is defined by a pair of gear wheels, wherein one of the pair of gear wheels is a fixed gear wheel and the respective other one is a free gear wheel. Accordingly, the output gear wheel 200a' is a free gear wheel, comprising an inner part 230a' that can freely rotate on the output shaft 20', if it is not engaged with an engaging part 60a, as will be described later. Similarly, the input gear wheel 100b' is a free gear wheel, comprising an inner part 130b' that can freely rotate on the input shaft 10', if not engaged with a respective engaging part 60b. To provide a freely rotating gear wheel, bearings 142b' and 242a' are provided between the input shaft 10' and the inner part 130b', respectively between the output shaft 20' and the inner part 230a'.

The gear wheels 100a', 100b', 200a', 200b' are provided with respective gearings, comprising at least one tooth 115a', 215a', 215b'. Further, the divided gear wheels 100a', 100b', 200a', 200b' each comprise respective inner parts 130a', 130b', 230a', 230b', that are coupled to respective outer parts 110a', 110b', 210a', 210b' by means of elastic elements 150a', 150b', 250a', 250b'. This coupling allows for an angular deflection of the inner parts 130a', 130b', 230a', 230b' relative to the outer parts 110a', 110b', 210a', 210b'. If the elastic elements 150', 250' are fully loaded, torque is transferred from the respective inner parts 130a', 130b', 230a', 230b' to the outer parts 110a', 110b', 210a', 210b' with a ratio of 1:1.

As shown, the automatic power transmission system 1', as depicted in Fig. 7, differs from the automatic power transmission system 1, as e.g. depicted in Fig. 2, in particular in that the engaging part(s) is designed differently. This different engaging parts 60a, 60b allows to provide an automatic transmission system, having reduced length dimensions. This is, as each free divided gear wheel 100b', 200a' is assigned to a separate engaging part 60a, 60b. Accordingly, the free gears of adjacent gear ratios can be provided alternatingly on the input and output shaft 10', 20'.

The engaging parts 60a, 60b are helically guided by respective helical means 90a, 90b that are provided as separate parts and that are attached torque proved to the respective input and output shafts 10', 20'. The helical means 90a, 90b are provided with at least one helical tooth 92a, 92b. This helical tooth guides the engaging part 60a, 60b helically, i.e. in an axial and rotational direction as described above.

Further, each free divided gear wheel comprises at its inner part 230a', 130b' engagement means 231a', 131b' that are adapted to engage with engagement means 66 of the engaging part 60a, 60b.

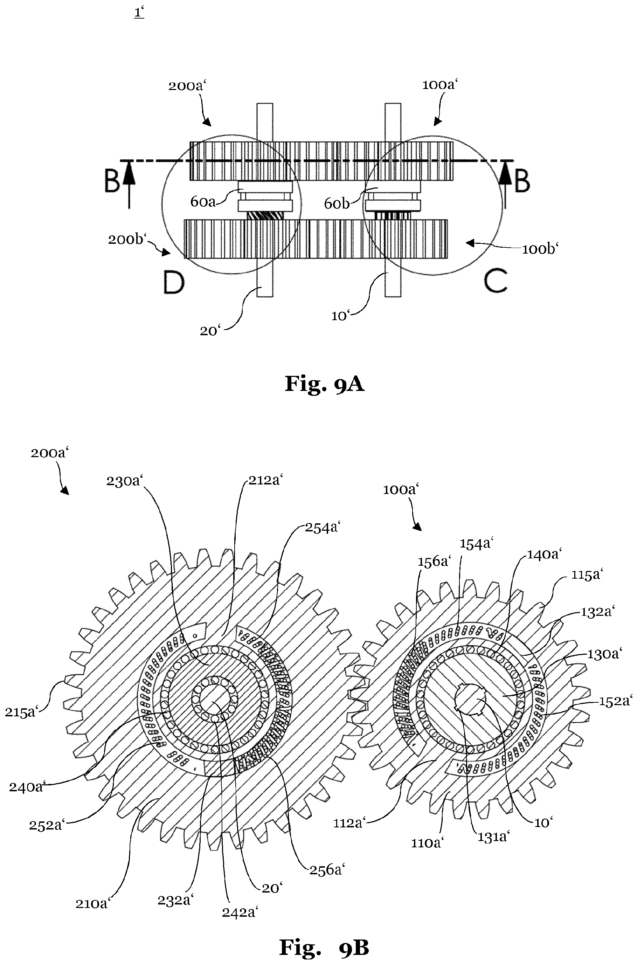

Figure 9A shows a schematic top view of the automatic power transmission system 1' of Figure 8. The automatic power transmission system comprises an input shaft 10' and an output shaft 20' as well as input gear wheels 100a', 100b' and output gear wheels 200a', 200b'. The free gear wheels 100b', 200a' can be temporarily torque proof attached to the respective input shaft 10' or output shaft 20' by means of engaging parts 60a, 60b. In the configuration shown in Figure 9A, the output gear wheel 200a' is engaged with the engaging part 60a thereby being able to transfer torque to the output shaft 20'. The engaging part 60b is disengaged and thus, the input gear wheel 100b' cannot transfer torque to the input shaft 10'.

Figure 9B is a schematic cut view of the first input gear wheel 100a' and the first output gear wheel 200a', that are in engagement with each other. The design of the input and output gear wheels 100a' and 200a' corresponds to the design of the gear wheels, discussed with respect to Figure 5. In particular, the input gear wheel 100a' corresponds to the input gear wheel 100a. The output gear wheel 200a' differs from the output gear wheel 200a depicted in Figure 5 in respect to the inner part 230a/230a'. In particular, the inner part 230a' is supported by a bearing 242a' on the output shaft 20'. No engagement means are provided on the inner circumferential surface of the inner part 230a'. Those engagement means 231a' are provided on a front face of the inner part 230a' as shown in Figure 8.

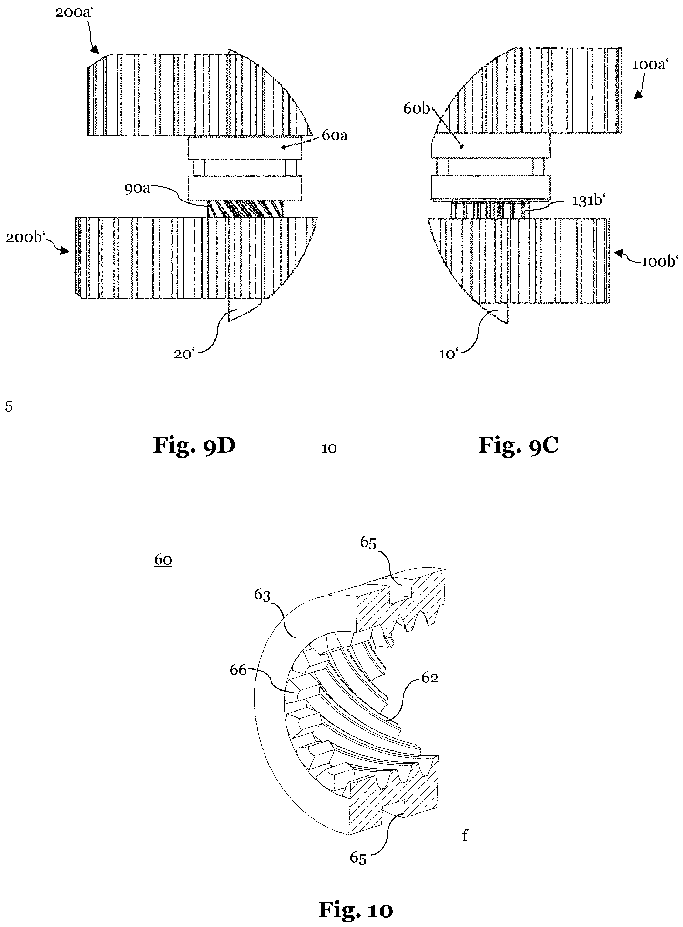

Figures 9C and 9D show detailed views of the engagement parts 60a, 60b. As shown in Figure 9C, the engaging part 60b is disengaged and the engagement means 131b' of input gear wheel 100b' are not engaged with the engaging part 60b. Figure 9D shows an engaged engaging part 60a. Accordingly, the engagement means of output gear wheel 200a' are covered by the engaging part 60a and the helical means 90a can be seen in the top view of Figure 9D.

Figure 10 shows a cut view of an engaging part 60. The engaging part 60 comprises a bushing portion 63 that has on its inner circumferential surface a corresponding helical tooth 62 that is in engagement with the helical tooth 92 of a helical means 90, as shown e.g. in the previous figures. Thus, helical guiding of the engaging part 60 can be achieved. Further, corresponding engagement means 66 are provided, which are adapted to engage with engagement means of respective inner parts of the divided gear wheels 100', 200'. On an outer circumferential surface of the bushing portion 63, an actuator coupling 65 is provided in form of a groove that allows an actuator to move the engaging part axially.

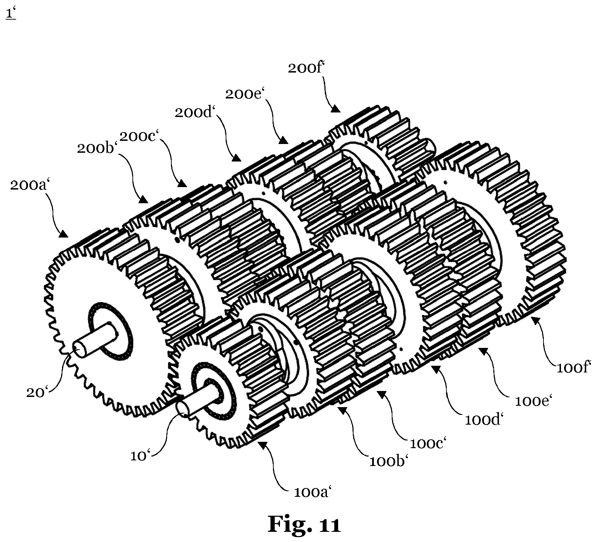

Figure 11 shows an example of an automatic power transmission system, comprising six gear ratios, defined by respective pairs of input gear wheels 100a', 100b', 100c', 100d', 100e', 100f' and output gear wheels 200a', 200b', 200c', 200d', 200e', 200f. The input gear wheels are supported by the input shaft 10' and the output gear wheels are supported by the output shaft 20'.

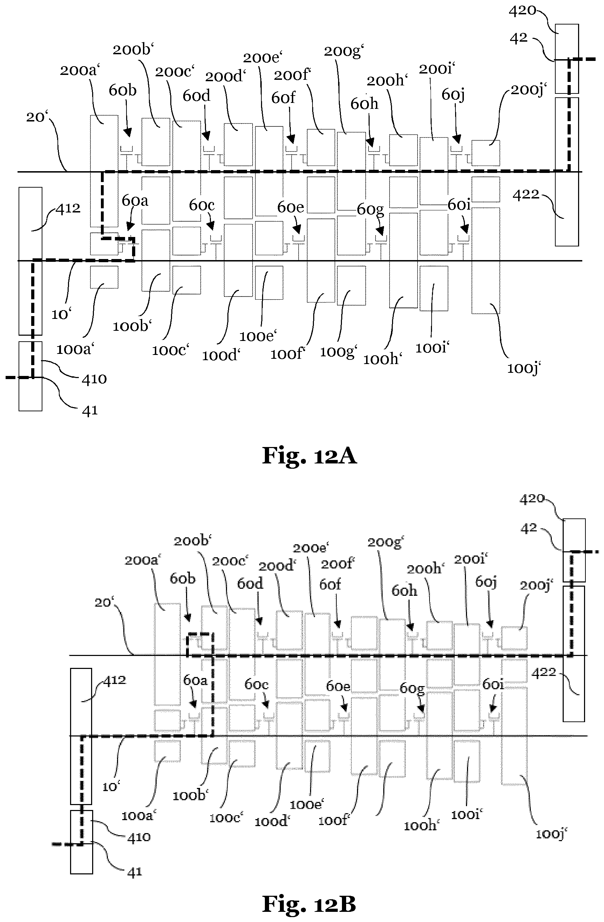

Figures 12A and 12B show schematic illustrations of an automatic power transmission system wherein according to Figure 12A a first gear ratio is operated and according to Figure 12B, a second gear ratio is operated. The first gear ratio is defined by the pair of gear wheels 100a', 200a' and the second gear ratio is defined by the pair of gear wheels 100b', 200b'.

The flow of power is illustrated as bold dashed line. According to Figure 12A, the power is transferred via the input shaft 10' and the engaging part 60a to the input gear wheel 100a' and then via the output gear wheel 200a' to the output shaft 20'. According to Figure 12B, the power is transferred via the input shaft 10' and the input gear wheel 100b' to the output gear wheel 200b'. Then, the power is transferred via the engaging part 60b to the output shaft 20'.

Further, the automatic power transmission system 1' may comprise an additional set of gear wheels provided upstream the first gear ratio, to reduce the engines revolutions. This set of gear wheels may comprise a primary input gear wheel 410, provided on a primary input shaft 41. The primary input gear wheel 410 may be coupled to a primary complementary input gear wheel 412, which is provided on the input shaft 10'. The flow of power may then be transferred from the primary input shaft 41 via the set of gear wheels 410, 412 to the input shaft 10'.

Additionally, or alternatively, the automatic power transmission system 1' may comprise a set of gear wheels provided downstream the last gear ratio of the automatic power transmission system, i.e. at the end of the output shaft 20'. This set of gear wheels may comprise a subsequent output gear wheel 422, provided on the output shaft 20'. The subsequent output gear wheel 422 may be coupled to a subsequent complementary output gear wheel 420, which is provided on a subsequent output shaft 42. The flow of power may then be transferred from the output shaft 20' via the set of gear wheels 422, 420 to the subsequent output shaft 42. As shown, the divided gear wheels that are free gear wheels are provided alternately on the input shaft 10' and the output shaft 20'. Each free gear wheel is assigned with a respective engaging part 60a to 60j. To operate the depicted automatic power transmission system, only one engaging part of the set of engaging parts 60a to 60j is engaged with the respective divided gear wheel, at a time where no power ratio changing action is performed, i.e. when a gear ratio is operated. During power transfer changing actions, two engaging parts may at least partly be engaged with the respective gear wheels, as described above with respect to Figures 6A to 7C. To change the gear ratio, the power transmission system requires to change gear ratios sequentially. That means that to change a gear ratio from the first to e.g. the fifth gear ratio, all gear ratios that are sandwiched between the first and fifth gear ratio must be operated for a short period of time. Thus, no direct gear ratio change from the first to the fifth gear ratio is possible.

The above described automatic power transmission system, comprising divided gear wheels allows for a continuous power transfer during gear ratio changing actions and for reduced power losses.

LIST OF REFERENCE SIGNS

| | |
|---|---|
| 1 | automatic power transmission system |
| 10 | input shaft |
| 20 | output shaft |
| 30 | engaging part |
| 33 | bushing portion |
| 32 | helical arm |
| 34 | helical arm |
| 35 | actuator coupling |
| 36 | corresponding engagement means |
| 38 | corresponding engagement means |
| 41 | primary input shaft |
| 42 | subsequent output shaft |
| 60 | engaging part |
| 62 | corresponding helical tooth |
| 63 | bushing portion |
| 65 | actuator coupling |
| 66 | corresponding engagement means |
| 80 | helical means |
| 82 | helical groove |
| 84 | helical groove |

90 helical means
92 helical tooth
100 input gear wheel
110 outer part
112 elastic element support
115 tooth
130 inner part
131 engagement means
132 elastic element support
140 bearing
142 bearing
150 elastic element
152 elastic element (spring element)
154 elastic element (spring element)
156 elastic element (spring element)
200 output gear wheel
210 outer part
212 elastic element support
215 tooth
230 inner part
231 engagement means
232 elastic element support
240 bearing
242 bearing
250 elastic element
252 elastic element (spring element)
254 elastic element (spring element)
256 elastic element (spring element)
410 primary input gear wheel
412 primary complementary input gear wheel
420 subsequent complementary output gear wheel
422 subsequent output gear wheel

## Claims

1. An automatic power transmission system (1), in particular for an automotive vehicle, comprising:

an input shaft (10), supporting input gear wheels (100);
an output shaft (20), supporting output gear wheels (200), wherein each of the input gear wheels (100) engages with a corresponding output gear wheel (200), thereby defining a gear ratio, wherein at least one of the input gear wheels (100) and/or at least one of the output gear wheels (200) of a gear ratio is a divided gear wheel, wherein the divided gear wheel (100, 200) comprises
an inner part (130, 230) and
an outer part (110, 210), comprising teeth for torque transmission with another gear wheel, wherein the inner part (130, 230) and the outer part (110, 210) have a common rotational axis, and wherein the inner part (130, 230) is at least partially arranged within the outer part (110, 210),
the inner part (130, 230) being coupled to the outer part (110, 210) by means of sets of two elastic elements (154, 156, 254, 256), so that the inner part (130, 230) is arranged angularly deflectable with respect to the outer part (130, 230) around the common rotational axis, wherein
the inner part (130, 230) and the outer part (110, 210) are adapted to rotate with the same angular velocity when the at least two elastic elements (154, 156, 254, 256) are fully loaded, wherein
the two elastic elements (154, 156, 254, 256) of each set are preferably received within at least one compartment, formed by the inner part (130, 230) and the outer part (110, 210), wherein
engagement means (131, 231) are provided on an inner circumferential surface or on a front face of the inner part (130, 230) of the divided gear wheel, wherein
the engagement means (131, 231) are adapted to engage with an engaging part (30, 60) of the automatic power transmission system (1), and wherein

the sets of two elastic elements (154, 156, 254, 256) are arranged evenly distributed in a circumferential direction,

**characterized in that**

a first elastic element (154, 254) of the two elastic elements of each set is partially arranged within a second elastic element (156, 256) of the two elastic elements of each set and protrudes out of the second elastic element (156, 256) on a front face, wherein
the spring constant of the first elastic element is lower than the spring constant of the second elastic element, and wherein
the automatic power transmission system (1) comprises at least one engaging part (30, 60), that is assigned to the input shaft (10) or the output shaft (20) and to at least a divided gear wheel, wherein the engaging part (30, 60) is arranged axially movable along the assigned shaft (10, 20) to change a gear ratio, wherein the engaging part (30, 60) is adapted to engage with the inner part (130, 230) of the divided gear wheel, thereby torque proof fixing the inner part (130, 230) with the assigned shaft, wherein the engaging part is torque proof connected with the assigned shaft, and wherein the engaging part is arranged concentrically to the assigned shaft.

2. The automatic power transmission system (1) according to any of claim 1, wherein at least one additional gear wheel is supported by the input shaft (10) and/or the output shaft (20), and wherein the additional gear wheel preferably engages with a gear wheel of a planetary gear.

3. The automatic power transmission system (1) according to any of claims 1 to 2, further comprising a sequential shift actuator, adapted to axially move the at least one engaging part (30, 60), to change a gear ratio.

4. The automatic power transmission system (1) according to any of claims 1 to 3, further comprising a control unit that is adapted to command a gear ratio changing action.

5. A method for operating an automatic power transmission system (1) according to any of claims 1 to 4, the method comprising the following steps:

rotating the input shaft and transferring power to the output shaft by means of a first gear ratio;
commanding a gear ratio changing action from a first gear ratio to a second gear ratio;
axially moving an engaging part (30, 60) for engaging a second gear ratio and thereby engaging the second gear ratio;
after the completion of the engagement of the second gear, the second gear ratio starts to handle load;
when the second gear ratio handles all the occurring load disengaging the first gear ratio;
rotating the input shaft and transferring power to the output shaft by means of the second gear ratio.

6. An automotive vehicle comprising an automatic power transmission system (1) according to any one of claims 1 to 4.

**Patentansprüche**

1. Automatikgetriebesystem (1), insbesondere für ein Kraftfahrzeug, das umfasst:

eine Antriebswelle (10), die Antriebszahnräder (100) stützt;
eine Abtriebswelle (20), die Abtriebszahnräder (200) stützt, wobei jedes der Antriebszahnräder (100) mit einem entsprechenden Abtriebszahnrad (200) in Eingriff steht, wodurch ein Übersetzungsverhältnis definiert wird, wobei mindestens eines der Antriebszahnräder (100) und/oder mindestens eines der Abtriebszahnräder (200) eines Übersetzungsverhältnisses ein geteiltes Zahnrad ist, wobei das geteilte Zahnrad (100, 200) umfasst:
einen inneren Teil (130, 230) und
einen äußeren Teil (110, 210), der Zähne für eine Drehmomentübertragung mit einem anderen Zahnrad umfasst, wobei
der innere Teil (130, 230) und der äußere Teil (110, 210) eine gemeinsame Drehachse besitzen, und wobei der innere Teil (130, 230) mindestens teilweise innerhalb des äußeren Teils (110, 210) angeordnet ist,
der innere Teil (130, 230) mit dem äußeren Teil (110, 210) mittels Sätzen von zwei elastischen Elementen (154, 156, 254, 256) so gekoppelt ist, dass der innere Teil (130, 230) in Bezug auf den äußeren Teil (130, 230) um die gemeinsame Drehachse winkelig auslenkbar angeordnet ist, wobei
der innere Teil (130, 230) und der äußere Teil (110, 210) dafür ausgelegt sind, sich mit derselben Winkelgeschwindigkeit zu drehen, wenn die mindestens zwei elastischen Elemente (154, 156, 254, 256) voll belastet sind, wobei

die zwei elastischen Elemente (154, 156, 254, 256) jedes Satzes bevorzugt in mindestens einem Raum aufgenommen sind, der durch den inneren Teil (130, 230) und den äußeren Teil (110, 210) gebildet wird, wobei Eingriffnahmemittel (131, 231) an einer Innenumfangsfläche oder an einer Vorderfläche des inneren Teils (130, 230) des geteilten Zahnrades angeordnet sind, wobei

die Eingriffnahmemittel (131, 231) dafür ausgelegt sind, mit einem Eingriffnahmeteil (30, 60) des Automatikgetriebesystems (1) in Eingriff zu gelangen, und wobei

die Sätze von zwei elastischen Elementen (154, 156, 254, 256) so angeordnet sind, dass sie gleichmäßig in einer Umfangsrichtung verteilt sind,

**dadurch gekennzeichnet, dass**

ein erstes elastisches Element (154, 254) der zwei elastischen Elemente jedes Satzes teilweise innerhalb eines zweiten elastischen Elements (156, 256) der zwei elastischen Elemente jedes Satzes angeordnet ist und an einer Vorderfläche aus dem zweiten elastischen Element (156, 256) herausragt, wobei

die Federkonstante des ersten elastischen Elements kleiner ist als die Federkonstante des zweiten elastischen Elements, und wobei

das Automatikgetriebesystem (1) mindestens einen Eingriffnahmeteil (30, 60) umfasst, der der Antriebswelle (10) oder der Abtriebswelle (20) und mindestens einem geteilten Zahnrad zugewiesen ist,

wobei der Eingriffnahmeteil (30, 60) entlang der zugewiesenen Welle (10, 20) axial beweglich angeordnet ist, um ein Übersetzungsverhältnis zu ändern, wobei der Eingriffnahmeteil (30, 60) dafür ausgelegt ist, mit dem inneren Teil (130, 230) des geteilten Zahnrades in Eingriff zu gelangen, wodurch der innere Teil (130, 230) drehmomentfest an der zugewiesenen Welle fixiert wird, wobei der Eingriffnahmeteil drehmomentfest mit der zugewiesenen Welle verbunden ist, und wobei der Eingriffnahmeteil konzentrisch zu der zugewiesenen Welle angeordnet ist.

2. Automatikgetriebesystem (1) nach Anspruch 1, wobei mindestens ein zusätzliches Zahnrad durch die Antriebswelle (10) und/oder die Abtriebswelle (20) gestützt wird, und wobei das zusätzliche Zahnrad bevorzugt mit einem Zahnrad eines Planetengetriebes in Eingriff steht.

3. Automatikgetriebesystem (1) nach einem der Ansprüche 1 und 2, das des Weiteren einen Aktuator für sequentielles Schalten umfasst, der dafür ausgelegt ist, den mindestens einen Eingriffnahmeteil (30, 60) axial zu bewegen, um ein Übersetzungsverhältnis zu ändern.

4. Automatikgetriebesystem (1) nach einem der Ansprüche 1 bis 3, das des Weiteren eine Steuereinheit umfasst, die dafür ausgelegt ist, eine Übersetzungsverhältnis-Änderungsaktion zu befehlen.

5. Verfahren zum Betreiben eines Automatikgetriebesystems (1) nach einem der Ansprüche 1 bis 4, wobei das Verfahren die folgenden Schritte umfasst:

Drehen der Antriebswelle und Übertragen von Kraft zu der Abtriebswelle mittels eines ersten Übersetzungsverhältnisses;
Befehlen einer Übersetzungsverhältnis-Änderungsaktion von einem ersten Übersetzungsverhältnis zu einem zweiten Übersetzungsverhältnis;
axiales Bewegen eines Eingriffnahmeteils (30, 60) zum Aktivieren eines zweiten Übersetzungsverhältnisses und dadurch Aktivieren des zweiten Übersetzungsverhältnisses;
nach vollendetem Einlegen des zweiten Gangs beginnt das zweite Übersetzungsverhältnis, eine Last zu verarbeiten;
wenn das zweite Übersetzungsverhältnis die gesamte auftretende Last verarbeitet, Deaktivieren des ersten Übersetzungsverhältnisses;
Drehen der Antriebswelle und Übertragen von Kraft zu der Abtriebswelle mittels des zweiten Übersetzungsverhältnisses.

6. Kraftfahrzeug, das ein Automatikgetriebesystem (1) nach einem der Ansprüche 1 bis 4 umfasst.

**Revendications**

1. Système de transmission de puissance automatique (1), en particulier pour un véhicule automobile, comprenant :

un arbre d'entrée (10), supportant des roues dentées d'entrée (100) ;

un arbre de sortie (20), supportant des roues dentées de sortie (200), dans lequel chacune des roues dentées d'entrée (100) s'engage avec une roue dentée de sortie (200) correspondante, en définissant de ce fait un rapport d'engrenage, dans lequel au moins l'une des roues dentées d'entrée (100) et/ou au moins l'une des roues dentées de sortie (200) d'un rapport d'engrenage est une roue dentée divisée, dans lequel la roue dentée divisée (100, 200) comprend

une partie intérieure (130, 230) et

une partie extérieure (110, 210), comprenant des dents pour une transmission de couple avec une autre roue dentée, dans lequel

la partie intérieure (130, 230) et la partie extérieure (110, 210) ont un axe de rotation commun, et dans lequel la partie intérieure (130, 230) est au moins partiellement agencée à l'intérieur de la partie extérieure (110, 210), la partie intérieure (130, 230) étant couplée à la partie extérieure (110, 210) au moyen d'ensembles de deux éléments élastiques (154, 156, 254, 256), de sorte que la partie intérieure (130, 230) soit agencée en pouvant être déviée angulairement par rapport à la partie extérieure (130, 230) autour de l'axe de rotation commun, dans lequel

la partie intérieure (130, 230) et la partie extérieure (110, 210) sont aptes à tourner avec la même vitesse angulaire lorsque les au moins deux éléments élastiques (154, 156, 254, 256) sont complètement chargés, dans lequel

les deux éléments élastiques (154, 156, 254, 256) de chaque ensemble sont de préférence reçus à l'intérieur d'au moins un compartiment, formé par la partie intérieure (130, 230) et la partie extérieure (110, 210), dans lequel des moyens d'engagement (131, 231) sont prévus sur une surface circonférentielle intérieure ou sur une face avant de la partie intérieure (130, 230) de la roue dentée divisée, dans lequel

les moyens d'engagement (131, 231) sont aptes à s'engager avec une partie d'engagement (30, 60) du système de transmission de puissance automatique (1), et dans lequel

les ensembles de deux éléments élastiques (154, 156, 254, 256) sont agencés en étant répartis uniformément dans une direction circonférentielle,

**caractérisé en ce que**

un premier élément élastique (154, 254) parmi les deux éléments élastiques de chaque ensemble est partiellement agencé à l'intérieur d'un deuxième élément élastique (156, 256) parmi les deux éléments élastiques de chaque ensemble et fait saillie hors du deuxième élément élastique (156, 256) sur une face avant, dans lequel la constante de ressort du premier élément élastique est inférieure à la constante de ressort du deuxième élément élastique, et dans lequel

le système de transmission de puissance automatique (1) comprend au moins une partie d'engagement (30, 60), qui est assignée à l'arbre d'entrée (10) ou à l'arbre de sortie (20) et à au moins une roue dentée divisée, dans lequel la partie d'engagement (30, 60) est agencée pour être mobile axialement le long de l'arbre assigné (10, 20) pour changer un rapport d'engrenage, dans lequel la partie d'engagement (30, 60) est apte à s'engager avec la partie intérieure (130, 230) de la roue dentée divisée, de ce fait en fixant solidaire en rotation la partie intérieure (130, 230) à l'arbre assigné, dans lequel la partie d'engagement est reliée solidaire en rotation à l'arbre assigné, et dans lequel la partie d'engagement est agencée de manière concentrique par rapport à l'arbre assigné.

2. Système de transmission de puissance automatique (1) selon la revendication 1, dans lequel au moins une roue dentée supplémentaire est supportée par l'arbre d'entrée (10) et/ou l'arbre de sortie (20), et dans lequel la roue dentée supplémentaire s'engage de préférence avec une roue dentée d'un engrenage planétaire.

3. Système de transmission de puissance automatique (1) selon la revendication 1 ou 2, comprenant en outre un actionneur de changement séquentiel, apte à déplacer axialement l'au moins une partie d'engagement (30, 60), pour changer un rapport d'engrenage.

4. Système de transmission de puissance automatique (1) selon l'une quelconque des revendications 1 à 3, comprenant en outre une unité de commande qui est apte à commander une action de changement de rapport d'engrenage.

5. Procédé de fonctionnement d'un système de transmission de puissance automatique (1) selon l'une quelconque des revendications 1 à 4, le procédé comprenant les étapes suivantes :

la rotation de l'arbre d'entrée et le transfert de puissance à l'arbre de sortie au moyen d'un premier rapport d'engrenage ;

la commande d'une action de changement de rapport d'engrenage d'un premier rapport d'engrenage à un deuxième rapport d'engrenage ;

le déplacement axial d'une partie d'engagement (30, 60) pour engager un deuxième rapport d'engrenage et de ce fait l'engagement du deuxième rapport d'engrenage ;

après l'achèvement de l'engagement du deuxième rapport d'engrenage, le deuxième rapport d'engrenage commence à gérer une charge ;

lorsque le deuxième rapport d'engrenage gère l'intégralité de la charge survenant, le désengagement du premier rapport d'engrenage ;

la rotation de l'arbre d'entrée et le transfert de puissance à l'arbre de sortie au moyen du deuxième rapport d'engrenage.

6. Véhicule automobile comprenant un système de transmission de puissance automatique (1) selon l'une quelconque des revendications 1 à 4.

**Fig. 1**

**Fig. 2**

**Fig. 3**

30

**Fig. 4**

**Fig. 5**

**Fig. 6A**

**Fig. 6B**

**Fig. 6C**

**Fig. 7A**

**Fig. 7B**

**Fig. 7C**

**Fig. 8**

1'

200a'  100a'

60a  60b

200b'  100b'

B  B

D  C

20'  10'

**Fig. 9A**

200a'

230a'  212a'  100a'
254a'
156a'  154a'  140a'
115a'
132a'
130a'
215a'
152a'
240a'
252a'
112a'
110a'  131a'  10'
210a'  232a'  20'  256a'
242a'

**Fig. 9B**

200a'

60a

90a

200b'

20'

**Fig. 9D**

60b

100a'

131b'

100b'

10'

**Fig. 9C**

60

65

63

66

62

65

f

**Fig. 10**

1'

200f'

200e'

200d'

200b' 200c'

200a'

20'

10'

100a'

100b'

100c'

100d'

100e'

100f'

**Fig. 11**

**Fig. 12A**

**Fig. 12B**

27

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 1162305 A
- WO 2008062192 A
- DE 219963 A
- US 2015072813 A1
- WO 2008062192 A1